# EUROPÄISCHE PATENTSCHRIFT

(11) **EP 3 116 672 B1**
(45) Veröffentlichungstag und Bekanntmachung des Hinweises auf die Patenterteilung: **03.09.2025**
(21) Anmeldenummer: 15704229.2
(22) Anmeldetag: 29.01.2015
(51) Int. Cl.: B23D 59/00, B27B 5/06

(54) **VERFAHREN ZUM BETREIBEN EINER PLATTENBEARBEITUNGSANLAGE**
METHOD FOR OPERATING A PANEL PROCESSING INSTALLATION
PROCÉDÉ SERVANT À FAIRE FONCTIONNER UNE INSTALLATION D'USINAGE DE PANNEAUX

(30) Priorität: 13.03.2014 DE 102014204695
(43) Veröffentlichungstag der Anmeldung: 18.01.2017
(73) Patentinhaber: HOMAG Plattenaufteiltechnik GmbH, 75365 Calw (DE)
(72) Erfinder: ZIMBAKOV, Darko, 71155 Altdorf (DE); ELHAUS, Uwe, 75365 Calw (DE); FRIEBOLIN, Manuel, 75365 Calw (DE)
(74) Vertreter: DREISS Patentanwälte PartG mbB
(86) Internationale Anmeldenummer: PCT/EP2015/051777
(87) Internationale Veröffentlichungsnummer: WO 2015/135686

(56) Entgegenhaltungen:
- EP-A1- 2 143 517
- EP-A1- 2 251 127
- EP-A2- 0 230 297
- EP-B1- 3 167 969
- WO-A1-86/06676
- DE-A1- 102008 014 869
- DE-A1- 102009 038 120
- DE-A1- 102010 017 857
- US-A1- 2001 047 702
- US-A1- 2005 189 040
- US-A1- 2007 289 673

## Beschreibung

Die Erfindung betrifft ein Verfahren zum Betreiben einer Plattenbearbeitungsanlage nach dem Oberbegriff des Anspruchs 1, sowie eine Plattenbearbeitungsanlage nach dem Oberbegriff des nebengeordneten Patentanspruchs.

DE 10 2009 038 120 A1 beschreibt eine Plattenbearbeitungsanlage in Form einer Plattenaufteilanlage zum Aufteilen großformatige Platten, beispielsweise für die Möbelindustrie. Hierzu verfügt die Plattenaufteilanlage über einen Programmschieber, der einer Aufteilsäge Platten zum Aufteilen zuführt. An einem Entnahmetisch steht eine Bedienperson und führt die Platten dem Programmschieber zu und entnimmt die aufgeteilten Platten. Über eine Anzeige- und Eingabevorrichtung kann die Bedienperson den Ablauf des Aufteilverfahrens steuern, beispielsweise Schnittpläne eingeben. DE 10 2008 014 869 A1 offenbart eine Plattenaufteilanlage, bei der ein im Bereich des Entnahmetisches vorhandenes Werkstück von einer Erfassungseinrichtung erfasst wird und bei der eine Handhabungsinformation an die Bedienperson abhängig von den erfassten Daten ausgegeben werden. DE 10 2010 017 857 A1 betrifft eine 3D-Sicherheitsvorrichtung zur Absicherung und Bedienung einer Maschine. Die Bedienung der Maschine kann durch die Bedienperson mittels Gesten erfolgen.

Die US 2005/0189040 A1 beschreibt ein Verfahren gemäß dem Oberbegriff des Anspruchs 1 und eine Plattenaufteilanlage gemäß dem Oberbegriff des Anspruchs 11, wobei die Plattenaufteilanlage mehrere Sägen und eine Bilderfassungseinrichtung, welche eine Teilbereich beobachtet, aufweist. Die US 2001/0047702 A1 offenbart eine Vorrichtung zum Schneiden von Platten, wobei Kameras das Dekor der Platten sowie eine Dimension analysieren, und hiervon abhängig eine Steuerung arbeitet. Die EP 2 143 517 A1 beschreibt eine Plattenaufteilanlage, bei der eine Kamera eine Referenzmarke in Form von Bohrlöchern in der Platte erfasst. Die WO 86/06676 A1 offenbart eine Plattenaufteilanlage, bei der eine Kamera eine Geometrie und Struktur der Werkstückoberfläche erfasst. Die US 2007/0289673 A1 betrifft eine Anlage zum Zuschneiden von Furnierplatten, bei der Kameras die Furnierplatten auf Fehler untersuchen. Die EP 2 251 127 A1 beschreibt eine Holzbearbeitungsmaschine, bei der eine Kamera die auf einem Luftkissentisch liegenden Werkstücke erfasst und bei der hieraus eine Dicke der Werkstücke ermittelt wird. Die EP 0 230 297 A2 beschreibt eine Vorschubsteuerung von Werkstücken, bei der die aktuelle Position der Werkstücke von einer Kamera erfasst wird. Die DE 10 2008 014 869 A1 offenbart eine Plattenaufteilanlage, bei der eine Kamera ein bearbeitetes Werkstück erfasst.

Es wurde erkannt, dass die bekannten Plattenbearbeitungsanlagen bisweilen noch nicht mit optimaler Effizienz arbeiten und es schwierig ist, auf unvorhergesehene Ereignisse zu reagieren. Hiervon ausgehend stellt sich die vorliegende Erfindung die Aufgabe, ein Verfahren der eingangs genannten Art zu schaffen, das effizient und flexibel ist.

Diese Aufgabe wird durch ein Verfahren mit den Merkmalen des Anspruchs 1 und eine Plattenbearbeitungsanlage mit den Merkmalen des nebengeordneten Patentanspruchs gelöst. Weiterbildungen der Erfindung sind in den Unteransprüchen angegeben. Weitere Merkmale der Erfindung sind aus den Figuren und der Figurenbeschreibung ersichtlich, wobei die Merkmale sowohl in Alleinstellung als auch in beliebigen Kombinationen für die Erfindung wesentlich sein können.

Die Erfindung zeichnet sich dadurch aus, dass die Maschine ihren Betrieb quasi selbstständig regelt. Anhand der Bilderfassungseinrichtung werden die in der Plattenbearbeitungsanlage befindlichen Werkstücke und deren Zustand erkannt, und entsprechend kann automatisch und ohne Zutun der Bedienperson der Betrieb der Plattenbearbeitungsanlage, insbesondere die Bearbeitungsreihenfolge (beispielsweise ein "Schnittplan"), die Bearbeitungsgeschwindigkeit, das Bearbeitungswerkzeug (beispielsweise Säge, Fräser, Bohrer), und der Anlagenzustand (Stopp, Start, Notbetrieb), auf die erfasste Situation eingestellt werden.

Beispielsweise kann von der Bilderfassungseinrichtung erfasst werden, welches Ausgangswerkstück die Bedienperson gerade der Plattenbearbeitungsanlage zuführt (es wird also allgemein gesprochen das Ausgangswerkstück und/oder das bearbeitete Werkstück anhand der erfassten und mit dem Ausgangswerkstück bzw. dem bearbeiteten Werkstück zusammenhängenden Größe einem Soll-Werkstück in einem Bearbeitungsplan zugeordnet), und die Plattenbearbeitungsanlage wählt dann automatisch und selbstständig das zu diesem Ausgangswerkstück gehörende Bearbeitungsprogramm auf und führt dieses aus. Auch wird erkannt, in welcher Orientierung die Bedienperson das Ausgangswerkstück zuführt, und passt dann wiederum automatisch und selbstständig die Bearbeitungsreihenfolge und Art so an, dass die gewünschten bearbeiteten Werkstücke erhalten werden. Allgemein kann die Bilderfassungseinrichtung die mit dem Ausgangswerkstück und/oder dem bearbeiteten Werkstück zusammenhängende Größe durch Auswertung von mindestens einem Parameter aus der folgenden Gruppe erfassen: Kontrast einer Kante, Kontrasteigenschaft und/oder Struktur einer Werkstückoberfläche, Differenzierung einer Fläche von einer vorab eingelernten Umgebung, Verschattung von Strukturzonen einer Auflagefläche, beispielsweise Abdeckung von Markierungen auf einem Auflagetisch, gleicher Kontrast einer Oberfläche, Raumgeschwindigkeit von Pixeln mit gleichen statischen und/oder dynamischen Eigenschaften, 3D-Informationen einer Stereoaufnahme (Stereobildeigenschaft).

Bei der Differenzierung einer Fläche von einer vorab eingelernten Umgebung wird das Aussehen der Plattenbearbeitungsanlage in einem Zustand, in dem sich keinerlei Werkstücke in der Plattenbearbeitungsanlage befinden, gelernt, und dann wird im Betrieb das gelernte Aussehen mit dem tatsächlichen Aussehen verglichen bzw. die entsprechende Differenz gebildet, was es gestattet, die mit dem dann in der Plattenbearbeitungsanlage befindlichen Ausgangswerkstück und/oder dem dann in der Plattenbearbeitungsanlage befindlichen bearbeiteten Werkstück zusammenhängende Größe zu erfassen. Ähnlich funktioniert die Erfassung beispielsweise von Abschattungen von Markierungen auf einem Auflagetisch durch ein Werkstück. Die Erfassung einer Raumgeschwindigkeit von Pixeln mit gleichen statischen und/oder dynamischen Eigenschaften bedeutet beispielsweise, dass aus sich in gleicher Weise verändernden Pixeln auf eine geometrische Zusammengehörigkeit von Pixeln und hieraus wiederum beispielsweise auf eine Größe und Orientierung eines sich bewegenden Werkstücks geschlossen wird.

Vorzugsweise verfolgt die Bilderfassungseinrichtung quasi jedes Werkstück vom Ausgangswerkstück über ein eventuelles Zwischenwerkstück bis zum fertig bearbeiteten Werkstück und erkennt, wo sich das jeweilige Werkstück befindet, um welches Werkstück es sich handelt, wie die Lage und Orientierung des Werkstücks ist, etc. Allgemein kann die mit dem Ausgangswerkstück und/oder dem bearbeiteten Werkstück zusammenhängende Größe mindestens eine aus der folgenden Gruppe sein: Abmessung, Orientierung, Lage im Raum, Position, Gewicht, Geschwindigkeit, Beschleunigung, Bewegungsrichtung, Qualität, Material, Oberflächeneigenschaft, Vorhandensein sowie Lage und Orientierung eines Etiketts oder einer anderer Markierung auf dem Werkstück, und Handhabung durch eine Bedienperson.

Ist eine Anpassung nicht möglich, beispielsweise weil ein gar nicht vorgesehenes Ausgangswerkstück (falsches Dekor, falsches Material, falsche Dimension) zugeführt wird, wird die Bedienperson durch eine entsprechende Daten- oder Informationsausgabe konkret angewiesen, das Werkstück mit einer anderen Orientierung oder überhaupt nicht einzuführen, und auch dies wird von der Bilderfassungseinrichtung überwacht. Hierzu kann beispielsweise eine Lasereinrichtung oder ein Beamer eine entsprechende Anweisung auf das Werkstück projizieren. Allgemein kann die Information an die Bedienperson optisch, insbesondere durch einen Bildschirm und/oder eine Laseranzeigeeinrichtung und/oder einen Beamer, die die Anweisung auf eine Stelle innerhalb der Plattenbearbeitungsanlage projiziert, akustisch und/oder haptisch ausgegeben werden.

Beispielsweise kann über die Informationsausgabe der Bedienperson angezeigt werden, an welcher Stelle ein bearbeitetes Werkstück abgestapelt werden soll, und die Bilderfassungseinrichtung prüft, ob der Anweisung tatsächlich richtig Folge geleistet wurde. Wenn nicht, werden entweder nachfolgende Arbeitsschritte entsprechend angepasst (beispielsweise ein Abstapelplan geändert), oder es wird eine neue Anweisung an die Bedienperson ausgegeben, die es ihr ermöglicht, einen begangenen Fehler zu korrigieren (beispielsweise ein Ausgangswerkstück mit der richtigen Orientierung zuzuführen).

Allgemein kann die Information an die Bedienperson durch mindestens eine Inhaltseigenschaft aus der folgenden Gruppe charakterisiert sein: Anweisung zum Zuführen eines Ausgangswerkstücks oder Zwischenwerkstücks (also eines Werkstücks, welches zwar schon eine Bearbeitung erfahren hat, aber noch eine weitere Bearbeitung erfahren muss), Anweisung zu einer Paketbildung (also Zusammenführen von Werkstücken zu einem Stapel für eine gemeinsame Bearbeitung), Anweisung zu einer Paketvereinzelung (also Entnehmen von Werkstücken aus einem Stapel nach einer gemeinsamen Bearbeitung), Anweisung zum Entnehmen eines bearbeiteten Werkstücks, Anweisung zum Puffern eines bearbeiteten Werkstücks, Anweisung zum Abstapeln eines bearbeiteten Werkstücks, Anweisung zum Beheben eines aufgetretenen Problems, Information bzgl. der Qualität eines Werkstücks, Information bzgl. eines aufgetretenen Fehlers, und Warnung vor einem drohenden Problem.

Auch wird von der Bilderfassungseinrichtung bzw. der Plattenbearbeitungsanlage erkannt, wenn von einem Ausgangswerkstück oder einem bearbeiteten Werkstück eine Gefahr ausgeht, beispielsweise, weil dieses von der Bedienperson so positioniert wurde, dass die Gefahr besteht, dass es herunterfällt. Auch in einem solchen Fall wird eine entsprechende Information oder Anweisung an die Bedienperson ausgegeben, oder der Betrieb der Plattenbearbeitungsanlage wird so geändert, dass die Gefahr nicht tatsächlich eintritt, indem beispielsweise die Plattenbearbeitungsanlage gestoppt wird, oder die Ausgabe eines bearbeiteten Werkstücks an einer anderen Stelle erfolgt.

Möglich ist auch, dass die Bedienperson beim Entnehmen eines bearbeiteten Werkstücks erkennt, dass dieses einer gewünschten Qualität nicht entspricht, und dieses Werkstück daher nicht abstapelt, sondern einer Ausschusssammelstelle zuführt. Dies wird ebenfalls durch die Bilderfassungseinrichtung erkannt, und nachfolgend wird der Betriebsablauf der Plattenbearbeitungsanlage so geändert, dass das "weggeworfene" Werkstück nachproduziert wird.

Anhand der Bilderfassungseinrichtung kann auch bei den Ausgangswerkstücken, bei Zwischenprodukten oder bei bearbeiteten Werkstücken eine Qualitätskontrolle durchgeführt werden, indem beispielsweise die Abmessungen und/oder die Qualität der Schnittkanten (Ausreißer, Wellen, etc.) überprüft werden. Wird eine mangelhafte Qualität festgestellt, kann automatisch eine Weisung an die Bedienperson ausgegeben werden das entsprechende Werkstück eine Ausschusssammelstelle zuzuführen, und es kann automatisch das Bearbeitungsprogramm so angepasst werden dass das als mangelhafte erkannte und aussortierte Werkstück nachproduziert wird.

Weiterhin ist es möglich, dass anhand der Bilderfassungseinrichtung erkannt wird, welcher Werkstoff und/oder welche Beschichtung gerade der Anlage zugeführt wird, und dass dann beispielsweise die Beleuchtung so angepasst wird, dass die Bedienperson bei dem spezifischen Werkstoff oder der spezifischen Oberflächenbeschichtung besonders gut die Qualität kontrollieren kann.

Grundsätzlich gilt, dass unter einer Bilderfassungseinrichtung im Sinne der vorliegenden Erfindung sowohl eine Einrichtung verstanden werden kann, die nur die reine Erfassungsfunktion hat (beispielsweise ein CCD-Sensor), als auch eine Kombination von Komponenten verstanden werden kann, die sowohl die reine Bilderfassung bewerkstelligt als auch die erfassten Signale bzw. Bilder verarbeitet (also eine Bilderfassungs- und verarbeitungseinrichtung), beispielsweise eine Kamera mit integrierter Verarbeitungs- und/oder Auswerteeinrichtung oder eine Kombination aus einer Kamera und einer an diese angeschlossenen Verarbeitungs- und/oder Auswerteeinrichtung, beispielsweise in Form einer Software einer Steuer- und Regeleinrichtung. In Frage kommt also an sich jegliche Einrichtung, welche in der Lage ist, maschinell und visuell mindestens eine der oben erwähnten Größen zu erfassen und zu verarbeiten oder einer Verarbeitung zuzuführen.

Zur Verbesserung der Erfassungsgenauigkeit kann an der Bilderfassungseinrichtung eine nicht dargestellte Reinigungseinrichtung vorhanden sein, welche Staub und andere Verunreinigungen von den optischen Komponenten fernhält oder die optischen Komponenten von solchen Verunreinigungen befreit, beispielsweise in Form einer Blasdüse.

Auch kann eine vorgesehene Bilderfassungseinrichtung motorisch schwenkbar und/oder translatorisch bewegbar sein, um automatisch auf bestimmte Bereiche der Plattenaufteilanlage gerichtet oder in deren Nähe gebracht werden zu können. Auch ein automatisches Zoom kann vorgesehen sein, um bestimmte zu erfassende Bereiche genauer erfassen zu können.

Ferner kann die Plattenbearbeitungsanlage eine spezifische Bestrahlungseinrichtung aufweisen, die bestimmte oder alle Bereiche der Plattenbearbeitungsanlage mit einer Strahlung bestrahlt, die von den zu beobachtenden Werkstücken und/oder Teilen der Plattenbearbeitungsanlage besonders gut reflektiert und/oder von der Bilderfassungseinrichtung besonders gut erfasst werden kann. Beispielsweise kann die Bestrahlungseinrichtung eine Infrarot- und/oder Ultraviolett-Strahlungsquelle umfassen. Ferner können spezielle Handschuhe vorgesehen sein, die die Bedienperson trägt und die die aktuellen Positionen der Hände der Bedienperson besonders gut für die Bilderfassungseinrichtung erfassbar machen.

Ferner kann es sich bei der Plattenbearbeitungsanlage um eine Plattenaufteilanlage zum Aufteilen großformatiger Platten handeln, wie sie beispielsweise in der Möbelindustrie zum Einsatz kommen. Diese Platten können beispielsweise aus Spanmaterial bestehen und eventuell auch beschichtet sein. Insbesondere ist eine Plattenaufteilsäge gemeint. Denkbar ist aber auch eine Plattenbearbeitungsanlage, bei der die Platten nicht aufgeteilt sondern lediglich bearbeitet werden, beispielsweise mit Nuten versehen werden o.ä.

Die Zeichnung zeigt ein Beispiel der Erfindung. In der Zeichnung zeigen:
- Figur 1: eine Draufsicht auf eine Plattenbearbeitungsanlage in Form einer Plattenaufteilanlage;
- Figur 2: eine perspektivische Darstellung auf eine Plattenaufteilanlage, die zu der von Figur 1 sehr ähnlich ist;
- Figur 3: eine vergrößerte Draufsicht auf einen Handlingbereich der Plattenaufteilanlage von Figur 2; und
- Figur 4: einen Schnittplan.

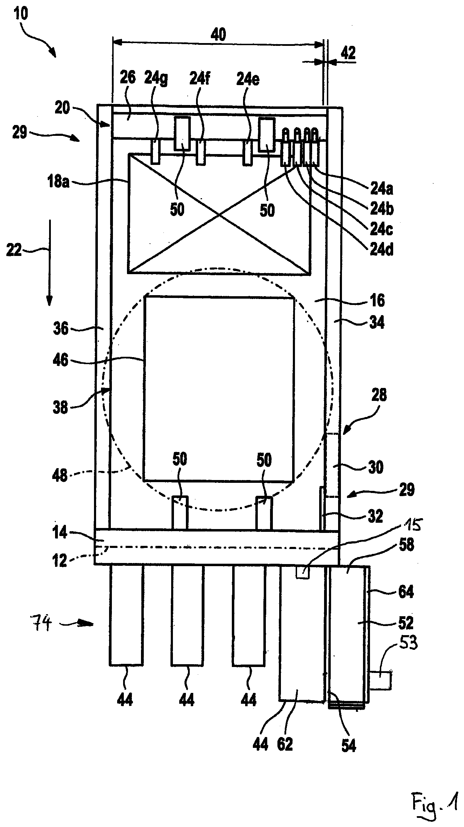

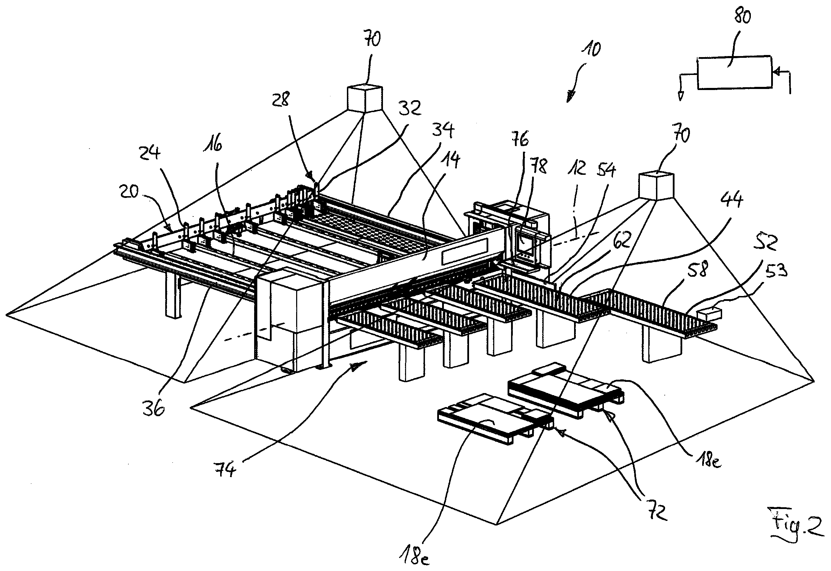

Eine Plattenbearbeitungsanlage in Form einer Plattenaufteilanlage trägt in den Figuren 1 und 2 insgesamt das Bezugszeichen 10. Sie umfasst als Aufteileinrichtung eine Säge, welche in den Figuren 1 und 2 jedoch nicht dargestellt ist. Lediglich die Aufteil- bzw. Sägelinie ist durch eine strichpunktierte Linie mit dem Bezugszeichen 12 angedeutet. Auch Aufteileinrichtungen mit anderen Trennverfahren kommen in Frage, beispielsweise eine Aufteileinrichtung mit einem Fräswerkzeug. Oberhalb der Sägelinie 12 ist ein Druckbalken 14 mit einem vorzugsweise automatischen Etikettiersystem 15, beispielsweise mit einem vorzugsweise beweglichen Etikettendrucker, vorhanden.

Zu der hier konkret gezeigten Plattenaufteilanlage 10 gehört ferner ein Auflagetisch 16, der beispielsweise durch eine Vielzahl von Rollen (nicht dargestellt) gebildet wird. Auf dem Auflagetisch 16 liegt bei der in Figur 1 dargestellten Ausgangskonfiguration der Plattenaufteilanlage 10 ein Stapel von plattenförmigen Werkstücken 18a. Dieser kann von einer ersten Vorschubeinrichtung 20 in Vorschubrichtung (Pfeil 22) und auch entgegen der Vorschubrichtung 22 bewegt werden, indem der Stapel von plattenförmigen Werkstücken 18a von ersten Greifeinrichtungen 24a bis 24g gegriffen wird. Diese sind an einem ersten Träger 26 angebracht.

Die Plattenaufteilanlage 10 umfasst ferner eine zweite Vorschubeinrichtung 28, die in der in Figur 1 dargestellten Ruheposition ganz in der Nähe zu der Sägelinie 12 angeordnet ist. Die zweite Vorschubeinrichtung 28 umfasst einen zweiten Träger 30, an dem seitlich, zum Auflagetisch 16 hin, eine zweite Greifeinrichtung 32 befestigt ist. Die beiden Vorschubeinrichtungen 20 und 28 bilden insgesamt eine Fördereinrichtung 29.

Der zweite Träger 30 ist, wie weiter unten noch stärker im Detail erläutert werden wird, an der Unterseite eines dritten Trägers 34 befestigt, der sich parallel zur Vorschubrichtung 22 erstreckt und den Auflagetisch 16 seitlich begrenzt. Parallel zum dritten Träger 34 ist auf der anderen Seite des Auflagetisches 16 ein vierter Träger 36 vorhanden. Der erste Träger 26 ist in der Art eines Portals auf den Oberseiten des dritten Trägers 34 beziehungsweise des vierten Trägers 36 gelagert.

Quer zur Vorschubrichtung 22 wird durch den Auflagetisch 16 und die beiden Träger 34 und 36 ein Vorschubbereich 38 definiert, in dem die von den Vorschubeinrichtungen 20 und 28 zu bewegenden Werkstücke 18 angeordnet werden können. Der Vorschubbereich 38 weist wiederum quer zur Vorschubrichtung 22 einen ersten Breitenbereich 40 und einen zweiten Breitenbereich 42 auf, die in Figur 1 durch entsprechende Breitenpfeile gekennzeichnet sind. Der erste Breitenbereich 40 ist dadurch definiert, dass in ihm die ersten Greifeinrichtungen 24a bis 24g angeordnet sind, und der zweite Breitenbereich 42 ist dadurch definiert, dass in ihm die zweite Greifeinrichtung 32 angeordnet ist. Man erkennt aus Figur 1, dass der erste Breitenbereich 40 direkt an den zweiten Breitenbereich 42 angrenzt, mit diesem jedoch nicht überlappt. Ferner erkennt man aus Figur 1, dass der zweite Träger 30 seitlich außerhalb von dem Vorschubbereich 38 beziehungsweise von dem zweiten Breitenbereich 42 gehalten ist.

Der erste Träger 26 ist seitlich vom dritten Träger 34 angeordnet und mittels einer nicht sichtbaren Rollenauflage in einer Nut auf der Oberseite des als Doppel-T-Profil ausgebildeten dritten Trägers 34 gelagert. Die Lagerung des ersten Trägers 26 auf dem vierten Träger 36 ist spiegelbildlich gleich. Der zweite Träger 30 der zweiten Vorschubeinrichtung 28 ist als Schlitten oder Wagen ausgeführt, der an einer in der Figur nicht sichtbaren Schiene an der Unterseite des dritten Trägers 34 längsverschieblich geführt ist. Der zweite Träger 30 ist also seitlich außerhalb von dem Vorschubbereich gehalten.

Beide Greifeinrichtungen 24 und 32 weisen an ihrem in Vorschubrichtung 22 zeigenden Ende obere und untere Greifbacken auf. Während die unteren Greifbacken starr sind, können die oberen Greifbacken in vertikaler Richtung bewegt werden. Auf diese Weise können zwischen den Greifbacken einer Greifeinrichtung 24 und 32 Werkstücke verklemmt werden. Von den sieben ersten Greifeinrichtungen 24a bis 24g können die vier Greifeinrichtungen 24a bis 24d, die zu der zweiten Vorschubeinrichtung 28 wenigstens in etwa benachbart sind, von einer vorderen Vorschubstellung in eine hintere Ruhestellung und zurück bewegt werden. Die anderen ersten Greifeinrichtungen 24e bis 24g haben Ruhestellung und Vorschubstellung senkrecht übereinander liegend.

Man erkennt aus Figur 1, dass der zweite Breitenbereich 42, der durch die Breite der zweiten Greifeinrichtung 32 definiert ist, deutlich kleiner ist als der erste Breitenbereich 40, in dem die ersten Greifeinrichtungen 24a bis 24g mindestens während einer Vorschubbewegung angeordnet sind.

Dabei entspricht die Höhe eines Freiraums (ohne Bezugszeichen) unterhalb der zweiten Greifeinrichtung 32 in deren angehobener Ruhestellung ungefähr der maximalen Höhe eines von der ersten Greifeinrichtung 24 greifbaren Stapels von Werkstücken. In gleicher Weise gilt, dass die Höhe eines Freiraums zwischen der Unterseite der ersten Greifeinrichtung 24 und dem Auflagetisch 16, in der angehobenen Ruhestellung der ersten Greifeinrichtung 24, ungefähr der maximalen Höhe eines von der zweiten Greifeinrichtung 32 greifbaren Stapels von Werkstücken entspricht.

Die in Figur 1 gezeigte Plattenaufteilanlage 10 weist auf der vom Auflagetisch 16 abgewandten Seite der Sägelinie 12 beziehungsweise des Druckbalkens 14 einen aus mehreren Einzeltischen bestehenden Entnahmetisch 44 auf. Von diesem können, wie weiter unten noch im Detail ausgeführt werden wird, die von der Säge aufgeteilten Werkstücke 18 von einer Bedienperson der Plattenaufteilanlage 10 entnommen oder für eine weitere Aufteilung der ersten Vorschubeinrichtung 20 und/oder der zweiten Vorschubeinrichtung 28 erneut zugeführt werden.

Ferner verfügt die hier konkret gezeigte Plattenaufteilanlage 10 im Bereich des Auflagetisches 16 über einen Drehtisch 46. Der bei einer Drehung des Drehtisches 46 umstrichene maximale Außenradius ist in Figur 1 durch eine strichpunktierte Linie mit dem Bezugszeichen 48 angedeutet. Außerdem sind zum einen am Druckbalken 14 und zum anderen am ersten Träger 26 jeweils zwei Ausrichtanschläge 50 vorhanden, die von einer abgesenkten Ruhestellung in eine angehobene Arbeitsposition und zurück bewegt werden können. Der Drehtisch 46 und die Ausrichtanschläge 50 sind jedoch optional.

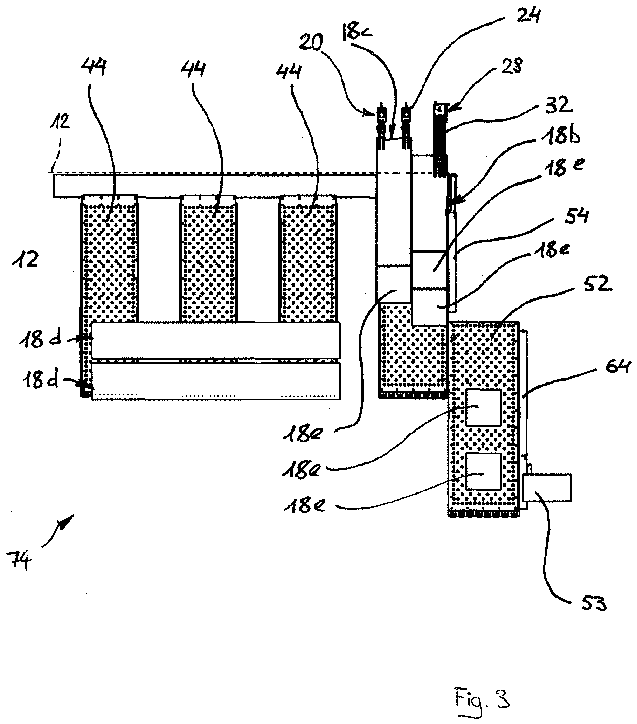

In Figur 1 rechts neben dem äußersten rechten Teil-Entnahmetisch 44 ist ein Puffertisch 52 mit einem Etikettiersystem 53, beispielsweise mit einem Etikettendrucker, angeordnet. An dem Entnahmetisch 44 ist ein sich parallel zur Vorschubrichtung 22 erstreckendes Winkellineal 54 angeordnet, welches fest mit dem Entnahmetisch 44 verbunden ist. Eine Oberseite 58 des Puffertisches 52 ist jederzeit bündig mit einer Oberseite 62 des Entnahmetisches 44. Der Puffertisch 52 ist bei der in den Figuren 2 und 3 gezeigten Konfiguration relativ zu dem Entnahmetisch 44 versetzt angeordnet, so dass das Winkellineal 54 den Transport des Werkstückes 18 nicht verhindert.

An seinem vom Entnahmetisch 44 fernliegenden Rand weist der Puffertisch 52 einen Anschlag in Form einer vertikal stehenden brettartigen Leiste 64 auf (Figur 1). Alternativ könnte anstelle oder zusätzlich zu der Leiste 64 auch eine Röllchenleiste, eine bedüste Leiste oder eine Mehrzahl von Röllchenleisten angeordnet sein.

Hingewiesen sei noch darauf, dass sowohl der Entnahmetisch 44 als auch der Puffertisch 52 und auch das Winkellineal 54, wie bereits erwähnt wurde, als sogenannte "Luftkissentische" ausgeführt sind bzw. sein können. Diese weisen auf ihrer Oberseite eine Vielzahl von beispielsweise durch ein Kugelventil verschließbaren Luftdüsen auf. Liegt ein Werkstück auf einer solchen Luftdüse, wird die Kugel des Kugelventils durch das Gewicht des Werkstücks nach unten gedrückt, so dass Luft aus der Luftdüse ausströmen und zwischen Puffertisch 52 beziehungsweise Entnahmetisch 44 und dem Werkstück ein Luftkissen ausbilden kann. Durch eine Änderung des Luftstromes kann die Reibung zwischen dem Entnahmetisch 44 und den Werkstücken 18 und damit die Geschwindigkeit der Werkstücke 18 auf dem Luftkissen manuell oder automatisch gesteuert bzw. geregelt werden.

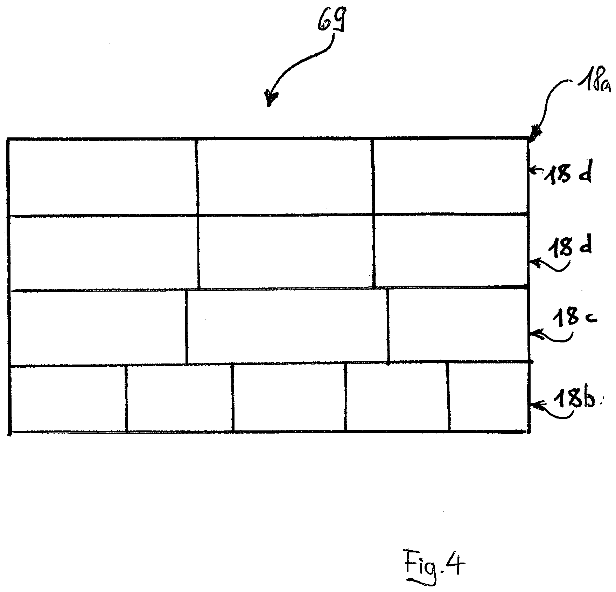

Die Plattenaufteilanlage 10 arbeitet folgendermaßen: Zunächst wird ein vergleichsweise großes plattenförmiges Werkstück ("Ausgangswerkstück"), wie es beispielsweise in den Figuren 1 und 4 mit dem Bezugszeichen 18a bezeichnet ist, von der ersten Vorschubeinrichtung 20 der Säge zugeführt und in mehrere längliche, streifenartige Werkstücke 18b, 18c, und 18d (Figuren 3 und 4) aufgeteilt (die Werkstücke 18b-3 sind insoweit bereits "bearbeitete" Werkstücke). Dies wird als "Längsaufteilung" bezeichnet. Die aufgeteilten streifenartigen Werkstücke werden dann von einer Bedienperson, die im Bereich des Entnahmetisches 44 steht, auf dem Entnahmetisch 44 um 90° gedreht und an dem Winkellineal 54 in Anlage gebracht.

Die beiden streifenförmigen Werkstücke 18b und 18c werden von der Bedienperson über die Sägelinie 12 hinweg in Richtung der beiden Vorschubeinrichtungen 20 und 28 geschoben, um von diesen ergriffen zu werden. Dabei sollen entsprechend einem vorgegebenen Bearbeitungs- bzw. Schnittplan 69 (siehe Figur 4) die zweite Vorschubeinrichtung 28 das zum Winkellineal 54 benachbarte Werkstück 18b und die erste Vorschubeinrichtung 20 das andere streifenförmige Werkstück 18c greifen. Die zwei Werkstücke 18d bleiben auf dem Entnahmetisch 44 liegen.

Nun werden beide streifenförmigen Werkstücke 18b und 18c quer aufgeteilt. Dies wird als "Queraufteilung" bezeichnet. Da die Werkstücke 18b und 18c zwar bereits durch die oben beschriebene Längsaufteilung bearbeitet wurden, aber noch weiter durch die gerade erwähnte Queraufteilung bearbeitet werden, werden sie auch als "Zwischenwerkstücke" bezeichnet. Dabei wird ein automatisierter und von einer nicht gezeigten Steuer- und Regeleinrichtung gesteuerter Vorgang in Gang gesetzt, bei dem die beiden Vorschubeinrichtungen 20 und 28 die beiden streifenförmigen Werkstücke 18b und 18c vom Entnahmetisch 44 entgegen der Vorschubrichtung 22 über die Sägelinie 12 hinweg vollständig auf den Auflagetisch 16 ziehen. Dort werden die beiden Werkstücke 18b und 18c an einem dort im Bereich des dritten Trägers 34 vorhandenen seitlichen Winkellineal (nicht gezeigt) in Anlage gebracht und dann in Vorschubrichtung 22 der Säge zugeführt. Diese Zuführung geschieht dabei durch die erste Vorschubeinrichtung 20 unabhängig von der zweiten Vorschubeinrichtung 28, so dass am einen streifenförmigen Werkstück 18b ein anderes Schnittbild realisiert werden kann als am anderen streifenförmigen Werkstück 18c. Dieses Schnittbild wird durch entsprechende Sägeschnitte entlang der Sägelinie 12 realisiert.

Während dieses automatisierten Vorganges kann die Bedienperson aufgeteilte Werkstücke 18e, welche auf dem Puffertisch 52 liegen und von einem vorhergehenden Sägevorgang stammen, vom Puffertisch 52 entnehmen und beispielsweise auf nur in Figur 2 gezeigte Abstapelplätze 72 abstapeln. Die Entnahmetische 44, das Winkellineal 54, der Puffertisch 52 und die Abstapelplätze 72 sind insgesamt Teil eines Handlingbereichs 74.

Bei der oben beschriebenen automatisierten Queraufteilung werden nun verschiedene kleine Einzelwerkstücke 18e erzeugt, die von den Vorschubeinrichtungen 20 und 28 auf den Entnahmetisch 44 geschoben werden. Die Einzelwerkstücke 18e haben ein Etikett, wobei die Etikettierung automatisch vor der Aufteilung (durch eine nicht dargestellte Flächenetikettierung) und/oder während der Aufteilung (mittels des automatischen Etikettendruckers 15) oder manuell nach der Aufteilung (mittels des Etikettendruckers 53) erfolgen kann. Ein Teil der auf diese Weise auf den Entnahmetisch 44 gelangenden Werkstücke 18e wird von der Bedienperson direkt vom Entnahmetisch 44 entnommen und auf die Abstapelplätze 72 verteilt.

Da aufgrund der hohen Taktgeschwindigkeit der Plattenaufteilanlage 10 die Menge der auf den Entnahmetisch 44 während einer Zeiteinheit gelangenden fertig bearbeiteten Werkstücke 18e jedoch größer ist als die Menge, die die Bedienperson während dieser Zeiteinheit auf die Abstapelplätze 72 verteilen kann, schiebt die Bedienperson jene Werkstücke 18e, die in der zur Verfügung stehenden Zeiteinheit nicht auf die Abstapelplätze 72 verteilt werden können, auf den Puffertisch 52. Hierbei handelt es sich bei dem hier konkret beschriebenen Fall um zwei Werkstücke, wobei die Anzahl selbstverständlich von der jeweiligen Betriebssituation der Plattenaufteilanlage 10 und der Arbeitsbelastung der Bedienperson abhängt. Am Ende dieses Vorganges ist der Entnahmetisch 44 von aufgeteilten Werkstücken 18e frei, wohingegen auf dem Puffertisch 52 die besagten zwei neuen Werkstücke 18e verbleiben.

Die Bedienperson kann nun die noch nicht fertig aufgeteilten Zwischenwerkstücke 18d drehen und am Winkellineal 54 anlegen, so dass diese von den beiden Vorschubeinrichtungen 20 und 28 gegriffen und im Rahmen des automatischen Vorganges auf den Auflagetisch 16 gezogen und dann der Sägelinie 12 zugeführt und dort aufgeteilt werden können. Während dieses automatisierten Vorganges können dann die auf dem Puffertisch 52 "geparkten" fertig bearbeiteten Werkstücke 18e entnommen und auf die Abstapelplätze 72 verteilt werden, und so weiter.

Das oben beschriebene Verfahren funktioniert nicht nur mit einzelnen Werkstücken, sondern auch mit Paketen von Werkstücken, also mehreren aufeinanderliegenden Werkstücken.

Wie aus Figur 2 ersichtlich ist, die eine nur in hier nicht erheblichen Details von Figur 1 unterschiedliche Plattenaufteilanlage 10 zeigt, gehört zu der Plattenaufteilanlage 10 auch eine zwei Kameras 70 umfassende Bilderfassungseinrichtung, die unter anderem oberhalb vom Handlingbereich 74, also vom Entnahmetisch 44 und vom Puffertisch 52 und von den Abstapelplätzen 72 angeordnet sind. Das Blickfeld der Kameras 70 ist auf den Zuführtisch 16, den Entnahmetisch 44, den Puffertisch 52, und die Abstapelplätze 72 und somit nicht nur auf einen Teilbereich der Plattenaufteilanlage 10, sondern auf die gesamte Plattenaufteilanlage 10 gerichtet. Bei anderen und nicht gezeigten Ausführungsformen sind weniger oder mehr Kameras oder andere visuelle Erfassungseinrichtungen oder Kombination von unterschiedlichen visuellen Erfassungseinrichtungen vorhanden. Außerdem können die Kameras auch an anderen Stellen der Plattenaufteilanlage 10 angeordnet sein, beispielsweise seitlich, vorne, hinten, unterhalb, am Druckbalken 14, den Vorschubeinrichtungen 20 und/oder 28, oder an mehreren von diesen Stellen.

Ferner gehört zu der Plattenaufteilanlage 10 noch ein nicht gezeigter Laserprojektor, der Informationen oder Anweisungen an die Bedienperson auf Werkstücke 18a-e projizieren kann, die auf dem Entnahmetisch 44, dem Puffertisch 52 oder den Abstapelplätzen 72 liegen. Anstelle des Laserprojektors oder zusätzlich zu dem Laserprojektor kann auch ein Beamer oder ein anderes Gerät zur Projektion von Informationen verwendet werden. Um das Risiko von Abschattungen zu vermeiden, können auch mehrere derartige Geräte an unterschiedlichen Stellen eingesetzt werden. Außerdem kann die Bedienperson ein Headset bestehend aus Kopfhörer und Mikrofon tragen, welches zur Sprachausgabe und von der Bedienperson zur Spracheingabe benutzt werden kann. Zur taktilen Eingabe von Befehlen ist eine Tastatur 76 vorhanden, zur Anzeige von Informationen ein Bildschirm 78 mit einem nicht gezeigten Antrieb zur Änderung der Ausrichtung und Position des Bildschirms 78.

Schließlich umfasst die Plattenaufteilanlage 10 eine Steuer- und Regeleinrichtung 80, welche Informationen von zahlreichen Erfassungseinrichtungen erhält, beispielsweise von den Kameras 70, der Tastatur 76 und dem Mikrofon. Die Steuer- und Regeleinrichtung 80 verfügt über einen Speicher, auf dem ein Computerprogramm abgespeichert ist, mit dem ein Verfahren zum Betreiben der Plattenaufteilanlage 10 gesteuert werden kann.

Die Steuer- und Regeleinrichtung 80 verfügt beispielsweise über eine Bildverarbeitungs- und -auswerteeinrichtung, die ebenfalls zu der oben beschriebenen Bilderfassungseinrichtung gehört. Diese ermittelt anhand der von den Kameras 70 bereit gestellten Signalen mit den in der Plattenaufteilanlage 10 befindlichen Werkstücken 18 zusammenhängende Größen, zu denen gehören können: Abmessung eines Werkstücks, Orientierung eines Werkstücks, Lage eines Werkstücks im Raum (Oberseite unten oder oben), Position eines Werkstücks, Gewicht eines Werkstücks, Geschwindigkeit eines Werkstücks, Beschleunigung eines Werkstücks, Bewegungsrichtung eines Werkstücks, Qualität eines Werkstücks (Ausreißer, Ecken- oder Kantenschäden, etc.), Material (MDF, Pressspan, Span, etc.), Oberflächeneigenschaft (Beschichtung ja/nein), Vorhandensein sowie Lage und Orientierung eines Etiketts auf dem Werkstück, und Handhabung durch eine Bedienperson (bspw. Verbringen eines bearbeiteten Werkstücks an eine nicht gezeigte Ausschusssammelstelle). Außerdem kann beispielsweise die aktuelle Position der Bedienperson ermittelt werden.

Dies alles ist anhand der Kameras 70 möglich, indem diese beispielsweise mindestens einen Parameter aus der folgenden Gruppe erfassen können und dieser von der Steuer- und Regeleinrichtung 80 entsprechend verarbeitet wird: Kontrast einer Kante, Kontrasteigenschaft und/oder Struktur einer Werkstückoberfläche, Differenzierung einer Fläche von einer vorab eingelernten Umgebung, Verschattung von Strukturzonen einer Auflagefläche, beispielsweise Abdeckung von Markierungen auf einem Auflagetisch, gleicher Kontrast einer Oberfläche, Raumgeschwindigkeit von Pixeln mit gleichen statischen und/oder dynamischen Eigenschaften, 3D-Informationen einer Stereoaufnahme (Stereobildeigenschaft).

Die Plattenbearbeitungsanlage 10 kann, wie oben bereits angedeutet wurde, ihren Betrieb quasi selbstständig regeln. Anhand der Kameras 70 werden die in der Plattenaufteilanlage 10 befindlichen Werkstücke 18a-e und deren Zustand beobachtet, und entsprechend kann von der Steuer- und Regeleinrichtung 80 automatisch und ohne Zutun der Bedienperson der Betrieb der Plattenaufteilanlage 10, insbesondere die Bearbeitungsreihenfolge (beispielsweise der beispielhaft in Figur 4 gezeigte Schnittplan 69), die Bearbeitungsgeschwindigkeit, das Bearbeitungswerkzeug (beispielsweise Säge, Fräser, Bohrer), und der Anlagenzustand (beispielsweise Stopp, Start, Notbetrieb), auf die erfasste Situation eingestellt werden.

Um beispielsweise den in Figur 4 gezeigten Schnittplan 69 realisieren zu können, ist es nötig, das Ausgangswerkstück 18a im ersten Arbeitsgang in vier streifenförmige bearbeitete Werkstücke, nämlich die Zwischenwerkstücke 18b, 18c und 18d aufzuteilen. Anschließend werden die Zwischenwerkstücke 18d, wie oben beschrieben, beispielsweise auf dem Entnahmetisch 44 oder auch auf dem Puffertisch 52 zwischengelagert und die Zwischenwerkstücke 18b und 18c in die Vorschubeinrichtungen 20 oder 28 eingelegt. Sollte in diesem Arbeitsschritt die Bedienperson die Werkstücke 18b und 18c, die eine unterschiedliche Breite haben, vertauscht haben, kann die Bilderfassungseinrichtung mit den Kameras 70 dies erkennen und den bevorstehenden Sägevorgang stoppen oder abändern. Die Bilderfassungseinrichtung mit den Kameras 70 verfolgt also die Bewegung der streifenförmigen Werkstücke 18b-d auf dem Entnahmetisch 44 und/oder dem Puffertisch 52 und prüft, ob die Bedienperson das richtige streifenförmige Werkstück 18c-d der entsprechenden Vorschubeinrichtung 20 bzw. 28 zugeordnet hat.

Ein weiteres Beispiel für die Vorzüge der vorliegenden Plattenaufteilanlage 10 ist die freie Gestaltung des Arbeitsablaufs. Die Bedienperson kann frei wählen, welches Zwischenwerkstück 18b, 18c oder 18d sie in die Vorschubeinrichtung 20 oder 28 einlegen möchte. Die Bilderfassungseinrichtung mit den Kameras 70 erkennt selbstständig die Werkstückgeometrie und führt den entsprechenden Schnittplan für dieses eingelegte Werkstück aus. Zudem können Verhaltensmuster der Bedienperson analysiert und die Schnittplanabläufe entsprechend korrigiert bzw. optimiert werden.

Beispielsweise kann mit Hilfe der Bilderfassungseinrichtung mit den Kameras 70 erfasst werden, welches Ausgangswerkstück 18b oder 18c die Bedienperson gerade den Vorschubeinrichtungen 20 und/oder 28 der Plattenaufteilanlage 10 zuführt (es wird also allgemein gesprochen das Ausgangswerkstück 18a und/oder das bearbeitete Werkstück 18b, 18c und/oder 18d anhand der erfassten und mit dem Ausgangswerkstück 18a bzw. dem bearbeiteten Werkstück 18b, 18c, und/oder 18d zusammenhängenden Größe einem entsprechenden Soll-Werkstück in einem abgespeicherten bzw. erstellten Bearbeitungsplan (Schnittplan 69) zugeordnet), und die Steuer- und Regeleinrichtung 80 der Plattenaufteilanlage 10 wählt dann automatisch und selbstständig das zu diesem Ausgangswerkstück 18a bzw. bearbeiteten bzw. Zwischenwerkstück 18b-d gehörende Bearbeitungsprogramm auf und führt dieses aus. Auch wird mittels der Bilderfassungseinrichtung mit den Kameras 70 erkannt, in welcher Orientierung die Bedienperson das Ausgangswerkstück 18a zuführt, und die Steuer- und Regeleinrichtung 80 passt dann wiederum automatisch und selbstständig die Bearbeitungsreihenfolge und Art so an, dass die gewünschten bearbeiteten Werkstücke 18b-d bzw. 18e erhalten werden.

Die Bilderfassungseinrichtung mit den Kameras 70 verfolgt somit quasi jedes Werkstück vom Ausgangswerkstück 18a bis zum bearbeiteten Werkstück 18e und erkennt, wo sich das jeweilige Werkstück 18a bis 18e befindet, um welches Werkstück 18a bis 18e es sich handelt, wie die Lage und Orientierung des Werkstücks 18a bis 18e ist, etc.

Ist eine Anpassung nicht möglich, beispielsweise weil ein gar nicht vorgesehenes Ausgangswerkstück 18a (falsches Dekor, falsches Material, falsche Dimension) zugeführt wird, wird die Bedienperson durch eine entsprechende Daten- oder Informationsausgabe beispielsweise am Bildschirm 78 oder über eine Laserprojektionseinrichtung konkret angewiesen, das Werkstück 18a mit einer anderen Orientierung oder gar nicht einzuführen, und auch dies wird mittels der Bilderfassungseinrichtung mit den Kameras 70 überwacht. Hierzu kann beispielsweise die (nicht gezeigte) Lasereinrichtung eine entsprechende Anweisung auf das Werkstück 18 projizieren. Allgemein kann die Information an die Bedienperson optisch, insbesondere durch den Bildschirm 78, und/oder die besagte Laseranzeigeeinrichtung, die die Anweisung auf eine Stelle innerhalb der Plattenbearbeitungsanlage 10 projiziert, akustisch durch einen Lautsprecher oder das oben erwähnte Headset, und/oder haptisch beispielsweise an der Tastatur 76 oder durch ein Vibrieren des Entnahmetisches 44 etc. ausgegeben werden.

Beispielsweise kann über die Informationsausgabe der Bedienperson auch angezeigt werden, an welcher Stelle und in welcher Orientierung auf einem Abstapelplatz 72 ein fertig bearbeitetes Werkstück 18e abgestapelt werden soll, und mittels der Bilderfassungseinrichtung mit den Kameras 70 wird geprüft, ob der Anweisung tatsächlich richtig Folge geleistet wurde. Wenn nicht, werden durch die Steuer- und Regeleinrichtung 80 entweder nachfolgende Arbeitsschritte entsprechend angepasst (beispielsweise ein Abstapelplan geändert), oder es wird eine neue Anweisung an die Bedienperson ausgegeben, die es ihr ermöglicht, einen begangenen Fehler zu korrigieren (beispielsweise ein Ausgangswerkstück 18a mit der richtigen Orientierung zuzuführen bzw. ein falsch abgestapeltes Werkstück 18e an der richtigen Stelle und/oder mit der richtigen Orientierung abzustapeln).

Zu den Informationen, die an die Bedienperson ausgegeben werden, kann insbesondere Folgendes gehören: Anweisung zum Zuführen eines Ausgangswerkstücks 18a oder Zwischenwerkstücks 18b-d, Anweisung zur Paketbildung, Anweisung zur Paketvereinzelung, Anweisung zum Entnehmen eines bearbeiteten Werkstücks (fertig bearbeitetes Werkstück 18e oder Zwischenwerkstück 18b-d), Anweisung zur Entnahme von Schnittresten bzw. Abfällen, Anweisung zum Puffern eines bearbeiteten Werkstücks 18b-e, Anweisung zum Abstapeln eines bearbeiteten Werkstücks 18e, Anweisung zum Beheben eines aufgetretenen Problems, Information bzgl. der Qualität eines Werkstücks 18a-e, Information bzgl. eines aufgetretenen Fehlers, und Warnung vor einem drohenden Problem. Diese Anweisung kann beispielweise bei der Drehung eines Werkstücks 18c-d in Form eines animierten Richtungsweisers auf die Mitte des betreffenden Werkstücks 18c-d mittels Laser projiziert werden. Weiterhin kann beispielsweise die Geometrie des Werkstücks 18c-d an der Sollposition in dem Handlingbereich 74, beispielsweise auf dem Puffertisch 52 oder auf den Abstapelplätzen 72, projiziert werden. Zudem kann die Laserprojektion auch zusätzliche Textinformationen beinhalten.

Auch wird mittels der Bilderfassungseinrichtung 70 bzw. der Steuer- und Regeleinrichtung 80 der Plattenaufteilanlage 10 erkannt, wenn von einem Ausgangswerkstück 18a oder einem bearbeiteten Werkstück 18b-e eine Gefahr ausgeht, beispielsweise, weil dieses von der Bedienperson so positioniert wurde, dass die Gefahr besteht, dass es vom Entnahmetisch 44 oder dem Puffertisch 52 herunterfällt. Auch in einem solchen Fall wird eine entsprechende Information oder Anweisung an die Bedienperson ausgegeben, oder der Betrieb der Plattenaufteilanlage 10 wird so geändert, dass die Gefahr nicht tatsächlich eintritt, indem beispielsweise die Plattenaufteilanlage 10 gestoppt wird, oder die Ausgabe eines bearbeiteten Werkstücks 18b-e an einer anderen Stelle erfolgt.

Auch wird mittels der Bilderfassungseinrichtung mit den Kameras 70 bzw. der Steuer- und Regeleinrichtung 80 der Plattenaufteilanlage 10 erkannt, wenn das bearbeitete Werkstück 18e vor dem Abstapelprozess noch nicht etikettiert ist. Auch in einem solchen Fall wird eine entsprechende Information oder Anweisung an die Bedienperson ausgegeben, oder der Betrieb der Plattenaufteilanlage 10 wird so geändert, dass die Bedienperson ausreichend Zeit hat, um das Etikett auf das Werkstück 18e aufzubringen, beispielsweise mit dem Etikettendrucker 53. Hierzu wird die Plattenaufteilanlage 10 beispielsweise automatisch und ausreichend lange gestoppt.

Ein weiteres Beispiel für die Verwendung der Bilderfassungseinrichtung mit den Kameras 70 kann eine Aufteilung von Zwischenwerkstücken 18b-d, beispielsweise in Streifenform, sein, die bereits mit Etiketten versehen, also "vorettiketiert" sind. Bei solchen voretikettierten Werkstücken - hier beispielsweise den Werkstücken 18b, 18c und 18d - müssen diese in die Vorschubeinrichtung 20 bzw. 28 entsprechend der Voretikettierung eingelegt werden. Hierbei verfolgt die Bilderfassungseinrichtung die Werkstücke 18b, 18c und 18d und die Position der auf diesen vorhandenen Etiketten. Im Falle einer Fehlpositionierung der Werkstücke 18b, 18c und/oder 18d in der Vorschubeinrichtung 20 oder 28 wird an die Bedienperson eine Fehlermeldung visuell ausgegeben.

Möglich ist auch, dass die Bedienperson beim Entnehmen eines bearbeiteten Werkstücks 18b-e erkennt, dass dieses einer gewünschten Qualität nicht entspricht, und dieses Werkstück 18e daher nicht an einem der Abstapelplätze abstapelt oder wieder der Vorschubeinrichtung 20 oder 28 zuführt, sondern einer nicht gezeigten aber oben bereits erwähnten Ausschusssammelstelle zuführt. Dies wird ebenfalls mittels der Bilderfassungseinrichtung mit den Kameras 70 und der Steuer- und Regeleinrichtung 80 erkannt, und nachfolgend wird der Betriebsablauf der Plattenaufteilanlage 10 durch die Steuer- und Regeleinrichtung 80 so geändert, dass das "weggeworfene" Werkstück 18 nachproduziert wird.

Anhand der Bilderfassungseinrichtung mit den Kameras 70 kann auch bei den Ausgangswerkstücken 18a, bei Zwischenwerkstücken 18b-d oder bei fertig bearbeiteten Werkstücken 18e eine Qualitätskontrolle durchgeführt werden, indem beispielsweise die Abmessungen und/oder die Qualität der Schnittkanten (Ausreißer, Wellen, etc.) überprüft werden. Wird mittels der Bilderfassungseinrichtung mit den Kameras 70 eine mangelhafte Qualität festgestellt, kann automatisch eine Weisung an die Bedienperson ausgegeben werden, das entsprechende Werkstück 18b-e der Ausschusssammelstelle zuzuführen, und es kann automatisch das Bearbeitungsprogramm so angepasst werden, dass das als mangelhafte erkannte und aussortierte Werkstück 18b-e nachproduziert wird.

Weiterhin ist es möglich, dass anhand der Bilderfassungseinrichtung mit den Kameras 70 erkannt wird, welcher Werkstoff und/oder welche Beschichtung das Werkstück hat, welches gerade der Plattenaufteilanlage 10 zugeführt wird, und dass dann beispielsweise eine Beleuchtung so angepasst wird, dass die Bedienperson bei dem spezifischen Werkstoff oder der spezifischen Oberflächenbeschichtung besonders gut die Qualität kontrollieren kann.

## Patentansprüche

1. Verfahren zum Betreiben einer Plattenbearbeitungsanlage (10), bei dem aus einem Ausgangswerkstück (18a) mittels einer Bearbeitungseinrichtung ein bearbeitetes Werkstück (18b-e) hergestellt wird, und bei dem mittels einer Bilderfassungseinrichtung (70) mindestens ein Teilbereich (74) der Plattenbearbeitungsanlage (10) beobachtet wird, wobei der Betrieb der Plattenbearbeitungsanlage (10) von mindestens einer von der Bilderfassungseinrichtung (70) erfassten und mit dem Ausgangswerkstück (18a) und/oder dem bearbeiteten Werkstück (18b-e) zusammenhängenden Größe abhängt, **dadurch gekennzeichnet, dass** das Ausgangswerkstück (18a) und/oder das bearbeitete Werkstück (18b-e) anhand der erfassten und mit dem Ausgangswerkstück (18a) bzw. dem bearbeiteten Werkstück (18b-e) zusammenhängenden Größe einem Soll-Werkstück in einem Bearbeitungsplan (69) zugeordnet und eine Bearbeitungsreihenfolge auf die erfasste Situation eingestellt wird.

2. Verfahren nach Anspruch 1, **dadurch gekennzeichnet, dass** der Betrieb der Plattenbearbeitungsanlage (10) durch mindestens eine Eigenschaft aus der folgenden Gruppe charakterisiert ist: Bearbeitungsreihenfolge, Bearbeitungsgeschwindigkeit, Bearbeitungswerkzeug, und Anlagenzustand.

3. Verfahren nach einem der vorhergehenden Ansprüche, **dadurch gekennzeichnet, dass** die mit dem Ausgangswerkstück (18a) und/oder dem bearbeiteten Werkstück (18b-d) zusammenhängende Größe mindestens eine aus der folgenden Gruppe ist: Abmessung, Orientierung, Lage im Raum, Position, Gewicht, Geschwindigkeit, Beschleunigung, Bewegungsrichtung, Qualität, Material, Oberflächeneigenschaft, Vorhandensein sowie Lage und Orientierung eines Etiketts oder einer anderen Markierung auf dem Werkstück (18a-e), und Handhabung durch eine Bedienperson.

4. Verfahren nach Anspruch 3, **dadurch gekennzeichnet, dass** die Bilderfassungseinrichtung (70) die mit dem Ausgangswerkstück (18a) und/oder dem bearbeiteten Werkstück (18b-e) zusammenhängende Größe erfasst durch Auswertung von mindestens einem Parameter aus der folgenden Gruppe: Kontrast einer Kante, Kontrasteigenschaft und/oder Struktur einer Werkstückoberfläche, Differenzierung einer Fläche von einer vorab eingelernten Umgebung, Verschattung von Strukturzonen einer Auflagefläche, beispielsweise Abdeckung von Markierungen auf einem Auflagetisch und/oder einem Entnahmetisch (44) und/oder einem Puffertisch (52), gleicher Kontrast einer Oberfläche, Raumgeschwindigkeit von Pixeln mit gleichen statischen und/oder dynamischen Eigenschaften, 3D-Informationen einer Stereoaufnahme (Stereobildeigenschaft).

5. Verfahren nach einem der vorhergehenden Ansprüche, **dadurch gekennzeichnet, dass** abhängig von der von der Bilderfassungseinrichtung (70) erfassten und mit dem Ausgangswerkstück (18a) und/oder dem bearbeiteten Werkstück (18b-e) zusammenhängenden Größe eine Datenausgabe oder eine Ausgabe einer Information an eine Bedienperson erfolgt.

6. Verfahren nach Anspruch 5, **dadurch gekennzeichnet, dass** die Information an die Bedienperson durch mindestens eine Inhaltseigenschaft aus der folgenden Gruppe charakterisiert ist: Anweisung zum Zuführen eines Ausgangswerkstücks (18a) oder Zwischenwerkstücks (18b-d), Anweisung zu einer Paketbildung, Anweisung zu einer Paketvereinzelung, Anweisung zum Entnehmen eines bearbeiteten Werkstücks (18b-e), Anweisung zum Puffern eines bearbeiteten Werkstücks (18b-e), Anweisung zum Abstapeln eines bearbeiteten Werkstücks (18e), Anweisung zum Beheben eines aufgetretenen Problems, Information bzgl. der Qualität eines Werkstücks (18a-e), Information bzgl. eines aufgetretenen Fehlers, und Warnung vor einem drohenden Problem.

7. Verfahren nach einem der Ansprüche 5 oder 6, **dadurch gekennzeichnet, dass** die Information an die Bedienperson optisch, insbesondere durch mindestens einen Bildschirm (78) und/oder mindestens eine Laseranzeigeeinrichtung und/oder mindestens einen Beamer, der bzw. die die Anweisung auf eine Stelle innerhalb der Plattenbearbeitungsanlage (10) projiziert, akustisch und/oder haptisch ausgegeben wird.

8. Verfahren nach Anspruch 7, **dadurch gekennzeichnet, dass** die Anweisung auf das Werkstück (18) projiziert wird.

9. Verfahren nach einem der Ansprüche 5-8, **dadurch gekennzeichnet, dass** über die Informationen der Bedienperson auch angezeigt wird, an welcher Stelle und in welcher Orientierung auf einem Abstapelplatz (72) ein fertig bearbeitetes Werkstück (18e) abgestapelt werden soll, und bei dem mittels der Bilderfassungseinrichtung geprüft wird, ob der Anweisung tatsächlich richtig Folge geleistet wurde und/oder bei dem eine neue Anweisung an die Bedienperson ausgegeben wird, die es ihr ermöglicht, einen begangenen Fehler zu korrigieren .

10. Verfahren nach Anspruch 9, **dadurch gekennzeichnet, dass** die Korrektur des begangenen Fehlers darin besteht, ein Ausgangswerkstück (18a) mit der richtigen Orientierung zuzuführen oder ein falsch abgestapeltes Werkstück (18e) an der richtigen Stelle und/oder mit der richtigen Orientierung abzustapeln.

11. Plattenbearbeitungsanlage (10), mit einer Bearbeitungseinrichtung, einem Zuführbereich (16) mit einem Vorschubsystem (29), welches ein Ausgangswerkstück (18a) der Bearbeitungseinrichtung zuführt, einem Entnahmebereich (44) zum Entnehmen eines bearbeiteten Werkstücks (18b-e) durch eine Bedienperson, und einer Bilderfassungseinrichtung (70) zum Beobachten mindestens eines Teilbereichs (16, 74) der Plattenbearbeitungsanlage (10), und mit einer Steuer- und/oder Regeleinrichtung (80) zum Steuern und/oder Regeln des Betriebs der Plattenbearbeitungsanlage (10), wobei die Steuer und/oder Regeleinrichtung (80) so programmiert ist, dass der Betrieb der Plattenbearbeitungsanlage (10) von mindestens einer von der Bilderfassungseinrichtung (70) erfassten und mit dem Ausgangswerkstück (18a) und/oder dem bearbeiteten Werkstück (18b-e) zusammenhängenden Größe abhängt, **dadurch gekennzeichnet, dass** das Ausgangswerkstück (18a) und/oder das bearbeitete Werkstück (18b-e) anhand der erfassten und mit dem Ausgangswerkstück (18a) bzw. dem bearbeiteten Werkstück (18b-e) zusammenhängenden Größe einem Soll-Werkstück in einem Bearbeitungsplan (69) zugeordnet wird, und dass eine Bearbeitungsreihenfolge auf die erfasste Situation eingestellt wird.

12. Plattenbearbeitungsanlage (10) nach Anspruch 11, **dadurch gekennzeichnet, dass** die Plattenbearbeitungsanlage (10) eine Aufteileinrichtung mit einer Säge oder einem Fräswerkzeug umfasst.

## Claims

1. Method for operating a panel processing system (10), in which a machined workpiece (18b-e) is produced from a starting workpiece (18a) by means of a processing device, and in which at least one partial region (74) of the panel processing system (10) is observed by means of an image capture device (70), the operation of the panel processing system (10) depending on at least one variable acquired by the image capture device (70) and related to the starting workpiece (18a) and/or to the machined workpiece (18b-e), **characterized in that** the starting workpiece (18a) and/or the machined workpiece (18b-e) is assigned to a target workpiece in a processing plan (69) on the basis of the acquired variable related to the starting workpiece (18a) or to the machined workpiece (18b-e), and a processing sequence is adjusted to the detected situation.

2. Method according to claim 1, **characterized in that** the operation of the panel processing system (10) is **characterized by** at least one property from the following group: processing sequence, processing speed, processing tool, and system status.

3. Method according to either of the preceding claims, **characterized in that** the variable related to the starting workpiece (18a) and/or to the machined workpiece (18b-d) is at least one from the following group: dimension, orientation, location in space, position, weight, speed, acceleration, direction of movement, quality, material, surface property, presence as well as location and orientation of a label or other marking on the workpiece (18a-e), and handling by an operator.

4. Method according to claim 3, **characterized in that** the image capture device (70) acquires the variable related to the starting workpiece (18a) and/or to the machined workpiece (18b-e) by evaluating at least one parameter from the following group: contrast of an edge, contrast property and/or structure of a workpiece surface, differentiation of a surface from a previously learned environment, shading of structural zones of a support surface, for example covering of markings on a support table and/or a removal table (44) and/or a buffer table (52), identical contrast of a surface, spatial velocity of pixels having identical static and/or dynamic properties, 3D information of a stereo recording (stereo image property).

5. Method according to any of the preceding claims, **characterized in that** depending on the variable acquired by the image capture device (70) and related to the starting workpiece (18a) and/or to the machined workpiece (18b-e), data or information is output to an operator.

6. Method according to claim 5, **characterized in that** the information to the operator is distinguished by at least one content property from the following group: instruction to feed a starting workpiece (18a) or intermediate workpiece (18b-d), instruction to form a package, instruction to separate packages, instruction to remove a machined workpiece (18b-e), instruction to buffer a machined workpiece (18b-e), instruction to stack a machined workpiece (18e), instruction to rectify a problem that has occurred, information regarding the quality of a workpiece (18a-e), information regarding an error that has occurred, and warning of an impending problem.

7. Method according to claim 5 or claim 6, **characterized in that** the information is output to the operator visually, in particular by at least one screen (78) and/or at least one laser display device and/or at least one beamer which project(s) the instruction onto a location within the panel processing system (10), acoustically and/or haptically.

8. Method according to claim 7, **characterized in that** the instruction is projected onto the workpiece (18).

9. Method according to any of claims 5-8, **characterized in that** the information also indicates to the operator at which location and in which orientation on a stacking station (72) a finished workpiece (18e) is to be stacked, and in which method the image capture device is used to check whether the instruction has actually been followed correctly and/or in which method a new instruction is issued to the operator which allows them to correct an error that has been made.

10. Method according to claim 9, **characterized in that** the correction of the error committed consists in feeding a starting workpiece (18a) with the correct orientation or in stacking an incorrectly stacked workpiece (18e) at the correct location and/or with the correct orientation.

11. Panel processing system (10) comprising a processing device, a feed region (16) having a feed system (29) which feeds a starting workpiece (18a) to the processing device, a removal region (44) for the removal of a machined workpiece (18b-e) by an operator, and an image capture device (70) for observing at least one partial region (16, 74) of the panel processing system (10), and having an open-loop and/or closed-loop control device (80) for open-loop and/or closed-loop control of the operation of the panel processing system (10), the open-loop and/or closed-loop control device (80) being programmed such that the operation of the panel processing system (10) depends on at least one variable acquired by the image capture device (70) and related to the starting workpiece (18a) and/or to the machined workpiece (18b-e), **characterized in that** the starting workpiece (18a) and/or the machined workpiece (18b-e) is assigned to a target workpiece in a processing plan (69) on the basis of the acquired variable related to the starting workpiece (18a) or to the machined workpiece (18b-e), and **in that** a processing sequence is adjusted to the detected situation.

12. Panel processing system (10) according to claim 11, **characterized in that** the panel processing system (10) comprises a dividing device having a saw or a milling tool.

## Revendications

1. Procédé destiné à faire fonctionner une installation d'usinage de panneaux (10), où une pièce usinée (18b-e) est fabriquée à partir d'une pièce à usiner de départ (18a) au moyen d'un dispositif d'usinage, et où au moins une zone partielle (74) de l'installation d'usinage de panneaux (10) est observée au moyen d'un dispositif de capture d'images (70), dans lequel le fonctionnement de l'installation d'usinage de panneaux (10) dépend d'au moins une grandeur détectée par le dispositif de capture d'images (70) et/ou liée à la pièce à usiner de départ (18a) et/ou à la pièce usinée (18b-e), **caractérisé en ce que** la pièce à usiner de départ (18a) et/ou la pièce usinée (18b-e) sont associées à une pièce à usiner théorique dans un plan d'usinage (69) à l'aide de la grandeur détectée et liée à la pièce à usiner de départ (18a) ou à la pièce usinée (18b-e) et un ordre d'usinage est réglé en fonction de la situation détectée.

2. Procédé selon la revendication 1, **caractérisé en ce que** le fonctionnement de l'installation d'usinage de panneaux (10) est **caractérisé par** au moins une propriété du groupe suivant: ordre d'usinage, vitesse d'usinage, outil d'usinage et état de l'installation.

3. Procédé selon l'une quelconque des revendications précédentes, **caractérisé en ce que** la grandeur liée à la pièce à usiner de départ (18a) et/ou à la pièce usinée (18b-d) est au moins une parmi le groupe suivant: dimension, orientation, position dans l'espace, position, poids, vitesse, accélération, sens de déplacement, qualité, matériau, propriété de surface, présence, position et orientation d'une étiquette ou d'un autre marquage sur la pièce à usiner (18a-e), et manipulation par un opérateur.

4. Procédé selon la revendication 3, **caractérisé en ce que** le dispositif de capture d'images (70) détecte la grandeur liée à la pièce à usiner de départ (18a) et/ou à la pièce usinée (18b-e) par évaluation d'au moins un paramètre issu du groupe suivant: contraste d'une arête, propriété de contraste et/ou structure d'une surface de pièce à usiner, différenciation d'une surface d'un environnement préalablement appris, ombrage de zones de structure d'une surface d'appui, par exemple recouvrement de marquages sur une table d'appui et/ou une table de prélèvement (44) et/ou une table tampon (52), même contraste d'une surface, vitesse spatiale de pixels ayant les mêmes propriétés statiques et/ou dynamiques, informations 3D d'un enregistrement stéréo (propriétés d'image stéréo).

5. Procédé selon l'une quelconque des revendications précédentes, **caractérisé en ce qu'**un envoi de données ou un envoi d'une information à un opérateur s'effectue en fonction de la grandeur détectée par le dispositif de capture d'images (70) et liée à la pièce à usiner de départ (18a) et/ou à la pièce usinée (18b-e).

6. Procédé selon la revendication 5, **caractérisé en ce que** l'information à l'opérateur est **caractérisée par** au moins une propriété de contenu issue du groupe suivant: instruction pour l'amenée d'une pièce à usiner de départ (18a) ou d'une pièce à usiner intermédiaire (18b-d), instruction pour la formation d'un paquet, instruction pour la séparation d'un paquet, instruction pour le retrait d'une pièce usinée (18b-e), instruction pour mettre en tampon une pièce usinée (18b-e), instruction pour empiler une pièce usinée (18e), instruction pour résoudre un problème survenu, information concernant la qualité d'une pièce (18a-e), information concernant une erreur survenue et avertissement de problème imminent.

7. Procédé selon l'une quelconque des revendications 5 ou 6, **caractérisé en ce que** l'information à l'opérateur est envoyée de manière optique, en particulier par au moins un écran (78) et/ou au moins un dispositif d'affichage laser et/ou au moins un projecteur, qui projette l'instruction sur un emplacement à l'intérieur de l'installation d'usinage de panneaux (10), de manière acoustique et/ou haptique.

8. Procédé selon la revendication 7, **caractérisé en ce que** l'instruction est projetée sur la pièce à usiner (18).

9. Procédé selon l'une quelconque des revendications 5 à 8, **caractérisé en ce que** l'information à l'opérateur indique également à quel emplacement et dans quelle orientation sur un emplacement d'empilage (72) une pièce déjà usinée (18e) doit être empilée, et où on vérifie au moyen du dispositif de capture d'images si l'instruction a effectivement été correctement suivie et/ou où une nouvelle instruction est envoyée à l'opérateur, laquelle lui permet de corriger une erreur commise.

10. Procédé selon la revendication 9, **caractérisé en ce que** la correction de l'erreur commise consiste à amener une pièce à usiner de départ (18a) avec la bonne orientation ou à empiler une pièce à usiner (18e) mal empilée sur le bon emplacement et/ou avec la bonne orientation.

11. Installation d'usinage de panneaux (10), avec un dispositif d'usinage, une zone d'amenée (16) avec un système d'avancement (29), qui amène une pièce à usiner de départ (18a) au dispositif d'usinage, une zone de prélèvement (44) pour le prélèvement d'une pièce usinée (18b-e) par un opérateur, et un dispositif de capture d'images (70) pour l'observation d'au moins une zone partielle (16, 74) de l'installation d'usinage de panneaux (10), et avec un dispositif de commande et/ou de régulation (80) pour commander et/ou réguler le fonctionnement de l'installation d'usinage de panneaux (10), dans laquelle le dispositif de commande et/ou de régulation (80) est programmé de telle sorte que le fonctionnement de l'installation d'usinage de panneaux (10) dépend d'au moins une grandeur détectée par le dispositif de capture d'images (70) et liée à la pièce à usiner de départ (18a) et/ou à la pièce usinée (18b-e), **caractérisée en ce que** la pièce à usiner de départ (18a) et/ou la pièce usinée (18b-e) sont associées, à l'aide de la grandeur détectée et liée à la pièce à usiner de départ (18a) ou à la pièce usinée (18b-e), à une pièce à usiner théorique dans un plan d'usinage (69), et qu'un ordre d'usinage est réglé en fonction de la situation saisie.

12. Installation d'usinage de panneaux (10) selon la revendication 11, **caractérisée en ce que** l'installation d'usinage de panneaux (10) comprend un dispositif de division avec une scie ou un outil de fraisage.
